# EUROPEAN PATENT APPLICATION

(11) **EP 2 530 469 A1**
(43) Date of publication of application: **05.12.2012**
(21) Application number: 11734779.9
(22) Date of filing: 21.01.2011
(51) Int. Cl.: G01N 35/00, G01N 21/01, G01N 21/90

(54) **AUTOMATIC ANALYZER**

(30) Priority: 25.01.2010 JP 2010012732
(71) Applicant: Hitachi High-Technologies Corporation, Tokyo 105-8717 (JP)
(72) Inventor: YOSHIDA Goro, Hitachinaka-shi Ibaraki 312-8504 (JP)
(74) Representative: Strehl Schübel-Hopf & Partner
(86) International application number: PCT/JP2011/051127
(87) International publication number: WO 2011/090173

(57) **Abstract**

Reaction vessels and a reaction vessel detecting mechanism are disposed on the outer circumference of a reaction disk. At least one positional detector for detecting the position of a reaction vessel is placed on the track of the reaction vessels. A light source and a spectrophotometer are also disposed so as to sandwich one of the reaction vessels, thereby measuring the light intensity of the reaction vessels. In this photometric method, the invention further provides the steps of: repetitively starting and stopping the rotation of the reaction disk with high resolution; conducting photometric measurement while the reaction disk is being halted; and acquiring an absorbance distribution of the reaction vessels. This makes it possible for an automatic analyzer, which examines particular constituents of a biological sample (e.g., blood and urine), to detect contaminants and scars on the reaction vessels in a separate manner, thereby ensuring the high quality of the reaction vessels.

## Description

### Technical Field

The present invention relates to automatic analyzers for analyzing biological samples (e.g., blood and urine) and particularly to an automatic analyzer that includes a reaction disk having reaction vessels (in which to react a sample and a reagent) arranged on the circumference thereof and that also includes a light source and a spectrophotometer that are disposed so as to sandwich one of the reaction vessels.

### Background Art

Automatic analyzers are used to examine particular constituents of a biological sample such as blood and urine. Colorimetric analyzers, in particular, are designed to perform analysis by measuring color change in the reacted solution resulting from the mixing of a sample and a reagent. More specifically, colorimetric analyzers irradiate transparent reaction vessels with light and measures absorbance change resulting from color change in the reacted solution. In this case, adhesion of contaminants to the reaction vessels may result in inaccurate measurement data. To prevent this, Patent Document 1 discloses a technique for monitoring reaction vessels for contaminants and identifying contaminated reaction vessels that are not suited for accurate measurement, so that such contaminated vessels will not be used for measurement.

### Prior Art Documents

### Patent Documents

Patent Document 1: JP-1986-25064-A

### Summary of the Invention

### Problems to be Solved by the Invention

Nozzles are inserted into a reaction vessel to dispense particular amounts of a sample and a reagent into the reaction vessel. In addition, a stirrer for stirring the sample-reagent mix and a rinse nozzle for rinsing waste after measurement are also put into the reaction vessel. If these nozzles and stirrer are deformed for some reason and put into the reaction vessel, the inner surfaces of the reaction vessel may be damaged with scars or scratches. According to the technique of Patent Document 1, both of scars and contaminants on reaction vessels can be detected, but contaminants cannot be distinguished from scars. Because scars and contaminants exert different influences on measurement, separate detection of the two will lead to enhanced measurement reliability. An object of the invention is thus to provide an automatic analyzer capable of separate detection of contaminants and scars on reaction vessels, so that measurement reliability can be improved. Means for Solving the Problems

The following configuration of the present invention achieves the above object.

An automatic analyzer according to the invention includes: a plurality of reaction vessels in which to mix a sample and a reagent; a light source for irradiating the plurality of reaction vessels with light; a detector for measuring the light that has passed through the plurality of reaction vessels; a reaction disk having the plurality of reaction vessels arranged on the circumference thereof; a reaction disk drive mechanism for rotating the reaction disk in a circumferential direction; a control mechanism for controlling at least either one of the detector and the reaction disk drive mechanism such that a circumferential length of each of the plurality of reaction vessels is divided into at least two areas and such that absorbance measurement is conducted for all of the divided areas; and a storage mechanism for storing the absorbances measured from all of the divided areas.

The following is a more specific embodiment of the prevent invention.

Reaction vessels and a reaction vessel detecting mechanism are disposed on the outer circumference of a reaction disk. At least one positional detector for detecting the position of a reaction vessel is placed on the track of the reaction vessels. A light source and a spectrophotometer are also disposed so as to sandwich one of the reaction vessels, thereby measuring the light intensity of the reaction vessels. In this photometric method, the invention further provides the steps of: repetitively starting and stopping the rotation of the reaction disk with high resolution; conducting photometric measurement while the reaction disk is being halted; and acquiring an absorbance distribution of the reaction vessels.

### Effect of the Invention

In accordance with the present invention, it is possible to detect contaminants and scars on reaction vessels in a separate manner, thereby enhancing the reliability of measurement.

### Brief Description of the Drawings

FIG. 1 is a schematic illustrating an automatic analyzer according to the invention.
FIG. 2 is a schematic illustrating a reaction disk, a detector, and reaction vessels.
FIG. 3 is the absorbance distribution graph obtained when reaction vessels passed a detector at normal speed (illustrating the absorbances of a scarred reaction vessel and a contaminated reaction vessel).
FIG. 4 is the absorbance distribution graph obtained when a stepper motor was operated per pulse.
FIG. 5 illustrates an example of measurement regions.

### Mode for Carrying Out the Invention

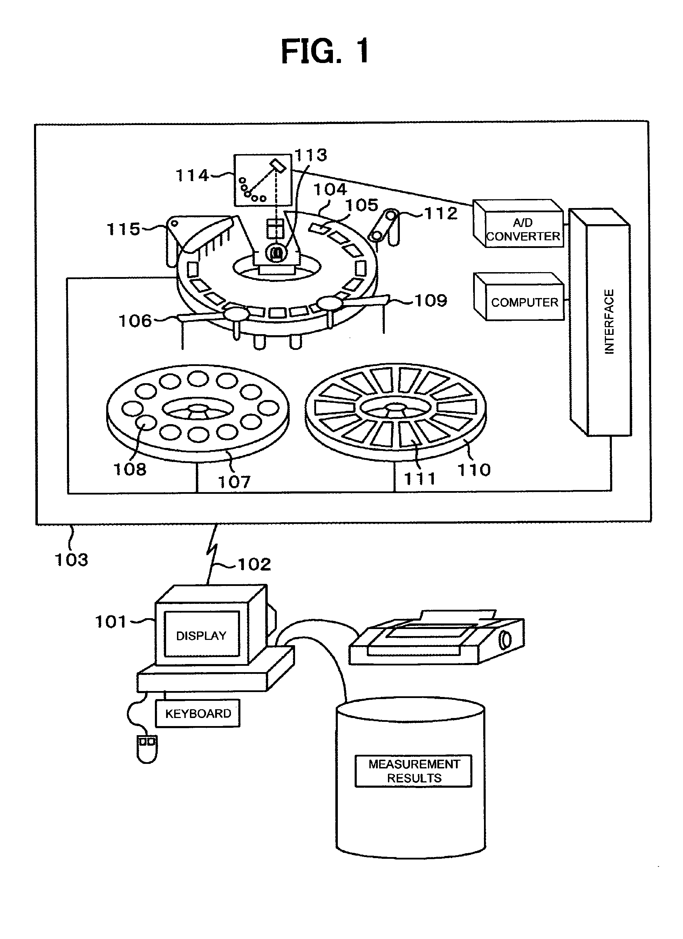

FIG. 1 is a schematic illustrating the overall configuration of an automatic analyzer according to the invention. First described are this automatic analyzer and the process of photometric measurement. As illustrated in FIG. 1, an operating unit 101 is used to select particular analyte constituents to be examined, and clicking on the start icon will result in an interface 102 transmitting such instructions to an analyzer unit 103. The analyzer unit 103 then rotates a reaction disk 104 based on the instructions, followed by the dispensing of a sample by a sample dispensing probe 106 into reaction vessels 105, the dispensing of a reagent by a reagent dispensing probe 109, and stirring by a stirrer 112. Thereafter, a light source 113 and a post-analyte multi-wavelength spectrophotometer 114 are utilized to measure the absorbances of reaction vessels 105 passing the spectrophotometer 114, thereby computing concentrations. After the measurement, a rinse mechanism 115 cleans the reaction vessels 105. The analyzer unit 103 then transmits the results of the concentrations calculated for the requested analyte constituents via the interface 102 to the operating unit 101, so that the user can know the concentrations of the requested analyte constituents.

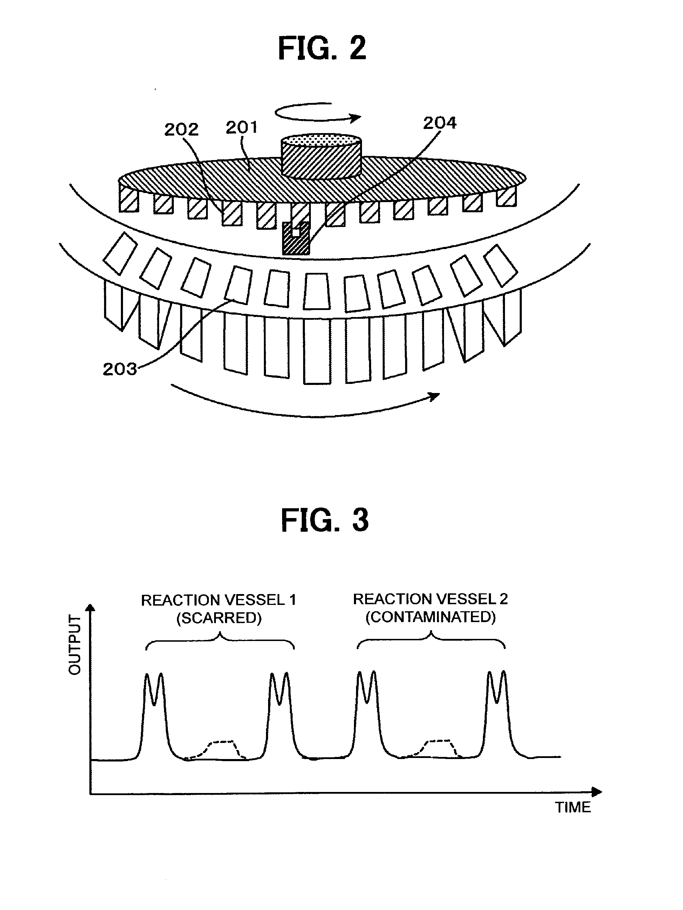

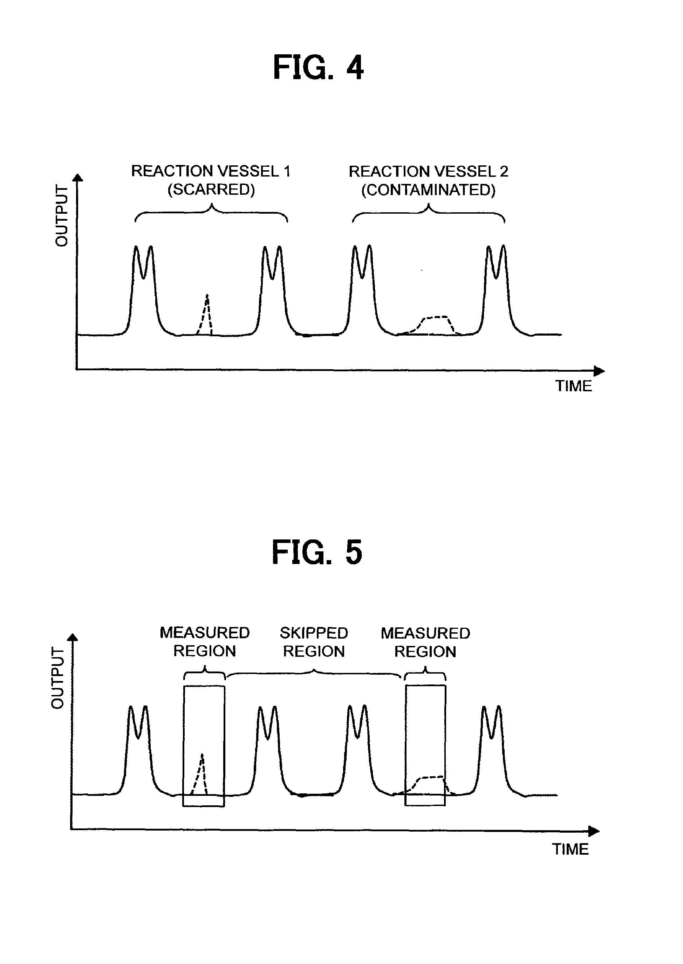

FIG. 2 is a schematic illustrating a reaction disk 201, a detector 204, and reaction vessels (cell type) 203, and FIG. 3 is the absorbance distribution graph obtained when reaction vessels passed the detector 204 at normal speed. Note that the graph of FIG. 3 illustrates the absorbances of a scarred reaction vessel and a contaminated reaction vessel. FIG. 4, in contrast, is the absorbance distribution graph obtained when a stepper motor was operated with a single pulse and then halted for measurement, followed by repetition of this process. As illustrated in FIG. 4 in which measurements were conducted after the halt of the stepper motor, an abrupt fluctuation occurred in response to a scar on a reaction vessel, differentiating the measurement results of FIG. 4 from those of FIG. 3. By exploiting this difference, a judgment can be made as to whether a reaction vessel has a scar or not. Because the measurement system requires response time, the halt of the stepper motor before measurement makes such a difference.

The data to be used when making the above judgment is the results of absorbance measurement obtained by measuring the absorbances of the flat portions of reaction vessels. Examples of abnormalities to be detected include a steep absorbance distribution slope (count/mm) of a reaction vessel (e.g., a slope greater than a given value) and a great difference between a first absorbance value and a second absorbance value which is obtained one pulse before the first absorbance value (e.g., an absorbance difference greater than a given value). A typical drive system for the reaction disk has a resolution of several tens of µm/pulse, which is sufficient for abnormality detection.

After detecting a scar on a reaction vessel, the analyzer unit notifies the user of the corresponding reaction vessel number and registers that reaction vessel as an unusable reaction vessel. If no problem is found with that reaction vessel after remeasurement, that registration is canceled. While the above example has adopted one-pulse rotation of the stepper motor, two or more-pulse rotation can also be adopted, which shortens measurement time. This decision can be made by taking into account light flux and the travel distance per pulse. In addition, measurement time can be shortened further by, as illustrated in FIG. 5, skipping unnecessary measurement regions and measuring only necessary regions and necessary reaction vessels. Furthermore, reducing the speed of the stepper motor can also lead to similar effects, which depends on the response time of the measurement system, though.

The present invention is applicable not only to automatic analysis, but to inspection devices used during the manufacture of reaction vessels. In the latter case, the quality of reaction vessels can be examined.

### Description of Reference Numerals

- 101:: Operating unit
- 102:: Interface
- 103:: Analyzer unit
- 104, 201:: Reaction disk
- 105, 203:: Reaction vessel
- 106:: Sample dispensing probe
- 107:: Sample disk
- 108:: Sample vessel
- 109:: Reagent dispensing probe
- 110:: Reagent disk
- 111:: Reagent bottle
- 112:: Stirrer
- 113:: Light source
- 114:: Post-analyte multi-wavelength spectrophotometer
- 115:: Rinse mechanism
- 202:: Detection plate
- 204:: Detector

## Claims

1. An automatic analyzer comprising:
a plurality of reaction vessels (105, 203) in which to mix a sample and a reagent;
a light source (113) for irradiating the plurality of reaction vessels with light;
a detector (114) for measuring the light that has passed through the plurality of reaction vessels;
a reaction disk (104, 201) having the plurality of reaction vessels arranged on the circumference thereof;
a reaction disk drive mechanism for rotating the reaction disk in a circumferential direction;
a control mechanism (101) for controlling at least either one of the detector and the reaction disk drive mechanism such that a circumferential length of each of the plurality of reaction vessels is divided into at least two areas and such that absorbance measurement is conducted for all of the divided areas; and
a storage mechanism for storing the absorbances measured from all of the divided areas.

2. The automatic analyzer of claim 1, further comprising a judgment mechanism (101) for determining the presence or absence of a scar by comparing the fluctuation patterns of the absorbances stored on the storage mechanism against given fluctuation patterns.

3. The automatic analyzer of claim 1 or 2, wherein the control mechanism (101) for controlling the reaction disk drive mechanism starts and stops the rotation of the reaction disk in a repetitive manner per pitch of each of the divided areas.

4. The automatic analyzer of claim 3, further comprising control means (101) for controlling the detector (114) such that absorbance measurement is conducted when the reaction disk (104, 201) stopped rotating.

5. The automatic analyzer of any one of claims 1 to 4, further comprising a changing mechanism (101) for changing the size of each of the divided areas according to at least either one of the rotational pitch of the reaction disk (104, 201) per cycle and areas of photometry.

6. The automatic analyzer of any one of claims 1 to 4, further comprising a selecting mechanism (101) for selecting, from among the plurality of reaction vessels (105, 203), a reaction vessel that is to be measured using divided measurement areas.

7. The automatic analyzer of claim 1, wherein the control mechanism (101) exercises control such that the photometry by the detector (114) is conducted using divided measurement areas.

8. The automatic analyzer of any one of claims 1 to 7, wherein the analyzer exercises at least one of the following controls when some abnormality is found in an absorbance distribution of the plurality of reaction vessels (105, 203): notifying a user of reaction vessels that have been judged abnormal so that the user can recognize the abnormal reaction vessels; and preventing the user from using the abnormal reaction vessels.

9. A reaction vessel inspecting apparatus having the characteristics of any one of claims 1 to 8.
